# EUROPÄISCHE PATENTANMELDUNG

(11) **EP 2 067 660 A2**
(43) Veröffentlichungstag der Anmeldung: **10.06.2009**
(21) Anmeldenummer: 08105550.1
(22) Anmeldetag: 10.10.2008
(51) Int. Cl.: B60Q 1/14, B60Q 1/26

(54) **Verfahren zum Verringern der Helligkeitsabgabe von Leuchtmitteln und Vorrichtung zum Vermindern der Helligkeit von Leuchtmitteln bei Fahrzeugen**

(30) Priorität: 06.12.2007 DE 102007058536
(71) Anmelder: Robert Bosch GmbH, 70442 Stuttgart (DE)
(72) Erfinder: Hoechst, Arnim, 72074 Tuebingen (DE)

(57) **Zusammenfassung**

Die Erfindung betrifft ein Verfahren zum Verringern der Helligkeitsabgabe von einem Leuchtmittel (1) bei einem Fahrzeug (2), insbesondere einem Kraftfahrzeug, wobei der Abstand (D1,D2) zu außerhalb des Fahrzeugs (2) befindlichen Objekten (9,6) mittels eines Sensors (3) ermittelt wird, wobei die Helligkeitsabgabe eines bereits aktivierten Leuchtmittels (1) in Abhängigkeit von dem ermittelten Abstand (D1,D2) verringert wird. Die Erfindung betrifft auch ein Verfahren, die technische Einrichtungen zum Durchführen eines solchen Verfahrens aufweist.

## Beschreibung

### Stand der Technik

Die Erfindung betrifft ein Verfahren zum Verringern der Helligkeitsabgabe von einem Leuchtmittel eines Fahrzeugs, insbesondere eines Kraftfahrzeugs, wobei der Abstand zu außerhalb des Fahrzeugs befindlichen Objekten mittels eines Sensors ermittelt wird.

Die Erfindung betrifft ferner eine Vorrichtung, die technische Einrichtungen enthält, um das Verfahren zum Verringern der Helligkeitsabgabe von einem Leuchtmittel bei Fahrzeugen, insbesondere Kraftfahrzeugen zu verringern, wobei der Abstand zu außerhalb des Fahrzeugs befindlichen Objekten mittels eines Sensors ermittelt ist. In modernen Fahrzeugen, insbesondere Kraftfahrzeugen, werden zunehmend hell leuchtende lichtemittierende Dioden (LEDs) und/oder Xenon-Scheinwerfer verwendet, die mit ihrer Helligkeit nicht geregelt werden. Dies gilt insbesondere für Bremsleuchten, Nebelschlussleuchten, das Abblendlicht und das Fernlicht. Dadurch können Fahrer nachfolgender und/oder vorausfahrender Fahrzeuge geblendet werden.

In dieser Anmeldung werden unter "Leuchtmitteln" solche Beleuchtungsvorrichtungen verstanden, die Lampen umfassen, wie Bremsleuchten, Nebelschlussleuchten, Abblendlicht und Fernlicht. Dabei werden in den Leuchtmitteln Leuchtdioden (LEDs), Xenonlampen und/oder Glühbirnen verwendet.

Aus dem Stand der Technik sind Auffahrwarnvorrichtungen für Kraftfahrzeuge bekannt. So offenbart die DE 10 2005 059 688 A1 eine Auffahrwarnvorrichtung in einem Kraftfahrzeug. In dem Kraftfahrzeug sind zumindest am Heck Sensoren vorhanden, die das sich Annähern eines weiteren Fahrzeugs von hinten detektieren. In dem Kraftfahrzeug ist ein Steuergerät enthalten, das beim Empfangen entsprechender Signale, die ein Annähern eines Fahrzeuges charakterisieren, z. B. die Bremsleuchte in einen situationsabhängigen Blinkmodus versetzt. Es ist offenbart, dass entsprechende Rückleuchten, wie etwa die Bremsleuchten, oder die Nebelschlussleuchte zum Blinken gebracht werden. Dabei wird die Lichtemission blinkend erhöht. Im Falle, dass eine Nebelleuchte als drittes Bremslicht genutzt wird, wird die bis dahin noch nicht aktivierte Bremsleuchte mit einer Leuchtintensität aktiviert, die unter der Leuchtintensität im regulären blinkfreien Nebelbetrieb liegt. Bei kritischer Annäherung eines Fahrzeuges, wird somit immer mehr Licht emittiert, als in dem Fall, in dem kein Fahrzeug sich von hinten kritisch annähert. Die DE 10 2005 059 688 A1 lehrt, dass ein Umschalten in einen Blinkmodus, zum Warnen des von hinten heranfahrenden Fahrers, nur dann erfolgen soll, wenn die Situation gefährlich ist und insbesondere in absehbarer Zeit zu einem Zusammenstoß führen würde.

Ein schrittweises Erhöhen der Lichtmenge, in Anpassung an die Fahrgegebenheit, ist auch in der DE 19 756 574 C2 offenbart. Dabei wird die Lichtverteilung eines Frontscheinwerfers an die Straßen- und Verkehrsgegebenheiten derart angepasst, dass unterschiedliche Bereiche der Fahrbahn ausgeleuchtet werden. Ein Umschalten von einem Fernlicht auf ein Abblendlicht ist dabei ebenfalls offenbart. Es wird dabei von einem Leuchtmittel auf ein anderes Leuchtmittel, nämlich von dem Fernlicht auf das Abblendlicht, umgeschalten.

Aus der DE 10 2006 016 073 A1 ist ein Verfahren zur Steuerung der Leuchtweite eines Kraftfahrzeugs bekannt. Dabei wird mittels einer Leuchtweitenregulierung die Leuchtweite eines Scheinwerfers variiert.

Die DE 10 2005 059 688 A1 nimmt den Nachteil in Kauf, dass ein hinter dem ersten Fahrzeug ein nachkommendes Fahrzeug führender Fahrer durch im Warnmodus blinkende Lichter geblendet wird. Dies erhöht die Unfallgefahr.

Die Lehre der DE 19 756 574 C2 weist den Nachteil auf, dass zum Vermeiden von Blendungen der Fahrer entgegenkommender Fahrzeuge zwei unterschiedliche Leuchtmittel, nämlich ein Fernlicht und ein Abblendlicht vorgesehen sein muss, zwischen denen dann umgeschalten wird.

Bei der DE 10 2006 016 073 A1 stellt sich ein hoher Energiebedarf dar, der selbst dann aufrechterhalten wird, wenn bei entgegenkommendem Gegenverkehr mittels Regulierung der Leuchtweite die Blendung des Führers eines entgegenkommenden Fahrzeuges vermieden wird.

Offenbarung der Erfindung

Die Aufgabe der Erfindung wird durch ein gattungsgemäßes Verfahren nach Anspruch 1 gelöst, bei dem die Helligkeitsabgabe eines bereits aktivierten Leuchtmittels in Abhängigkeit von dem ermittelten Abstand des Fahrzeugs zu einem außerhalb des Fahrzeugs befindlichen Objektes verringert wird.

Diese Aufgabe wird auch durch eine Vorrichtung gelöst, die technische Einrichtungen zum Durchführen dieses Verfahrens aufweist.

### Vorteile der Erfindung

Durch ein erfindungsgemäßes Verfahren und eine erfindungsgemäße Vorrichtung wird das Blenden des Führers eines entgegenkommenden Fahrzeuges und/oder eines sich von hinten nähernden Fahrzeuges vermieden. Beim Vermeiden des Blendens wird zusätzlich Energie eingespart. Selbst bei Ausfall der elektrischen Lichtmaschine oder bereits schwacher Batterie wird die elektrische Funktionsfähigkeit des Fahrzeuges länger aufrechterhalten als bei herkömmlichen Systemen. Durch das Vermeiden des Blendens verringert sich die Unfallgefahr, was eine Erhöhung der Straßenverkehrssicherheit nach sich zieht. Es kann ferner mit bereits im Fahrzeug vorhandenen Leuchtmitteln ausgekommen werden, ohne dass es nötig ist, zusätzliche Leuchtmittel vorzusehen. Die Kosten beim Herstellen eines Fahrzeuges, und die Kosten, die durch den Unterhalt des Fahrzeugs bedingt sind, werden dadurch besonders niedrig gehalten.

Vorteilhafte Ausbildungen und Weiterentwicklungen der Erfindung werden durch die in den abhängigen Ansprüchen angegebenen Maßnahmen ermöglicht. So ist es von besonderem Vorteil, wenn die emittierte Helligkeit des Leuchtmittels bei sich verringerndem Abstand des Fahrzeuges zu dem Objekt verringert wird. Es ist also möglich, die Leuchtstärke bei sich nähernden Fahrzeugen gezielt zu reduzieren, um die Führer der sich nähernden Fahrzeuge nicht zu blenden. In einer Autoschlange kann etwa das Bremslicht bei Stillstand gedimmt werden, um nachfolgende Fahrzeuge nicht zu blenden. Auch kann das Fernlicht auf die Stärke des Abblendlichtes gedimmt werden, oder automatisch abgeschaltet werden, um vorausfahrende Fahrzeuge nicht zu blenden. Dies betrifft auch den Fall, dass ein Fahrzeug entgegenkommt. Je mehr sich ein Fahrzeug also nähert, desto mehr wird die emittierte Helligkeit des Leuchtmittels reduziert. Ein Blenden wird dann besonders wirkungsvoll unterbunden.

Wenn die emittierte Helligkeit des Leuchtmittels kontinuierlich oder stufenweise verringert wird, so kann auf diese Weise dem sich nähernden Objekt signalisiert werden, wie weit es noch entfernt ist und/oder wie kritisch die Annäherungsgeschwindigkeit ist.

Als drei spezielle Ausgestaltungsvarianten hat sich ein lineares, progressives oder degressives Verringern der emittierten Helligkeit als Funktion des Abstandes, zu dem sensierten Objekt herausgestellt. Durch die Varianten des progressiven und degressiven Verringerns der Helligkeit als Funktion des Abstandes, lassen sich psychologische und physiologische Besonderheiten des menschlichen Körpers wirkungsvoll berücksichtigen.

Um die Reichweite der Beleuchtung unter Wahrung der Energieaufwendung zu optimieren, hat es sich als positiv herausgestellt, wenn das Leuchtmittel eine Leuchtdiode (LED) oder eine Xenonlampe aufweist. Wenn das Leuchtmittel eine Glühbirne umfasst, so lassen sich die Kosten für das Gesamtfahrzeug und für das entsprechende Leuchtmittel besonders gering halten.

Wenn das Leuchtmittel in einem Fernlicht, einem Abblendlicht, einem Bremslicht und/oder einem Nebellicht integriert ist, so kann auf bestehende Systeme der Beleuchtung von Fahrzeugen, insbesondere von Kraftfahrzeugen zurückgegriffen werden. Dies verringert die Planungs- und Herstellkosten eines Fahrzeuges, was die Akzeptanz im Markt erhöht.

Um auf die Besonderheiten bei einem Stau besonders effizient reagieren zu können, ist es von Vorteil, wenn die Helligkeitsabgabe bei Unterschreiten eines Mindestabstandes eines sensierten Objektes verringert wird. Hierdurch wird besonders wirkungsvoll das Blenden des im Stau hinter einem stehenden Führers eines Fahrzeuges verhindert.

Da sich das menschliche Auge bei Dunkelheit auf diese einstellt, indem die Iris weiter geöffnet wird, ist es von Vorteil, wenn die außerhalb des Fahrzeugs befindliche Helligkeit sensiert wird und bei Unterschreiten eines Helligkeitsschwellwertes die Verringerung der Helligkeitsabgabe des Leuchtmittels stärker bewirkt wird, als bei Überschreiben des Helligkeitsschwellwertes. Auf diese Weise kann bei Nacht das Bremslicht stärker gedimmt werden, als bei Tag. Ein Blenden des hinter einem befindlichen Führers eines nachfolgenden Fahrzeuges, wird damit besonders wirkungsvoll vermieden.

Da in neuwertigen Kraftfahrzeugen und Fahrzeugen häufig bereits Abstandssensoren vorhanden sind, ist es von Vorteil, wenn der Abstand mittels Abstandssensoren eines Abstandsregeltempomaten (ACC) oder mittels eines Parksensors ermittelt wird. Da diese Sensoren häufig ohnehin in Fahrzeugen verbaut werden, ist ohne Kostenmehraufwand und ohne erheblichen Konzessionsaufwand eine Mixung der von diesen Sensoren gelieferten Umgebungsinformationen möglich.

Das Implementieren des erfindungsgemäßen Verfahrens mittels einer Vorrichtung, die entsprechende technische Einrichtungen zum Durchführen des Verfahrens aufweist, ist von besonderem Vorteil, da das Verfahren mittels der Vorrichtung dann auch in älteren Kraftfahrzeugen nachrüstbar ist.

### Kurze Beschreibung der Zeichnungen

Die Erfindung wird nachstehend anhand der beigefügten Zeichnungen beispielhaft näher erläutert. Es zeigen:
- Figur 1: eine schematische Ansicht von oben auf ein erfindungsgemäßes Fahrzeug mit im Front- und Heckbereich vorhandenen Leuchtmittel und
- Figur 2: ein Ablaufdiagramm für ein erfindungsgemäßes Verfahren.

### Ausführungsformen der Erfindung

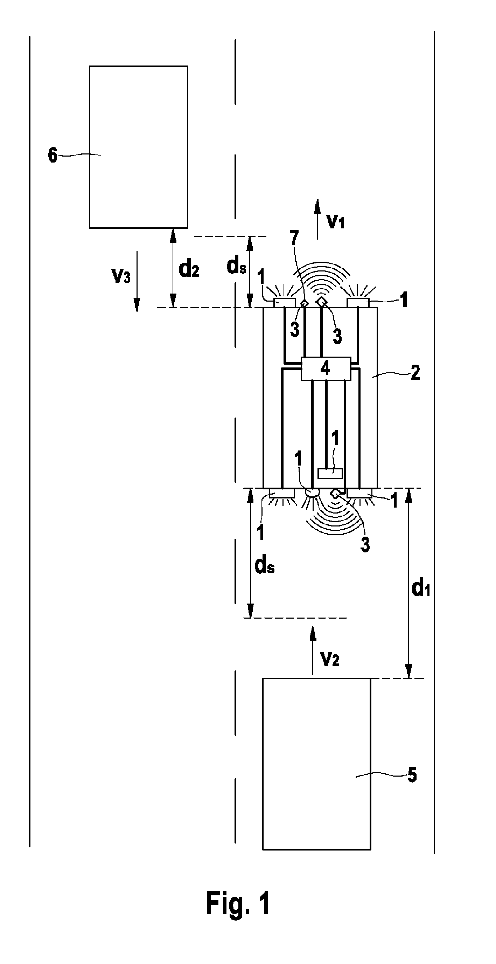

In Figur 1 ist eine schematische Ansicht einer Landstraße dargestellt, auf der ein mit Leuchtmittel 1 bestücktes Fahrzeug 2 fährt. Das Fahrzeug 2 ist im dargestellten Beispiel ein Kraftfahrzeug, insbesondere ein Kraftfahrzeug mit einem Verbrennungsmotor, wie etwa ein Pkw. Das Fahrzeug 2 bewegt sich in Richtung des Pfeils V1 mit einer ersten Geschwindigkeit. An dem Fahrzeug 2 sind im Frontbereich Leuchtmittel 1 angebracht. Im Heckbereich sind ebenfalls Leuchtmittel 1 angebracht. Das Fahrzeug 2 weist zumindest einen Sensor 3 zum Ermitteln des Abstandes zu außerhalb des Fahrzeugs 2 befindlichen Objekten auf. Im dargestellten Beispiel sind sowohl mindestens ein Sensor 3 im Frontbereich und ein Sensor 3 im Heckbereich angebracht.

Als Sensoren werden Ultraschallsensoren, Radarsensoren oder Infrarotsensoren benutzt. Auch eine Kombination der unterschiedlichen Sensorarten ist möglich.

In einem bevorzugten Ausführungsbeispiel ist der im Frontbereich des Fahrzeugs angeordnete Sensor 3 ein Radarsensor eines Abstandsregeltempomaten, der auch Teil einer Adapted Cruise Control (ACC) ist. Der im Heckbereich verbaute Sensor 3 ist im vorliegenden Ausführungsbeispiel ein Ultraschallsensor, der Teil einer Parksensorik ist. Diese Parksensorik wird im Normalfall zum Unterstützen von Ein- und/oder Ausparkvorgängen benutzt.

Die Leuchtmittel 1 und die Sensoren 3 sind mit einer Steuer- oder Regelvorrichtung 4 verbunden. In der Steuer- oder Regelvorrichtung 4 wird die mit den Sensoren 3 erhaltene Information dahingehend umgewandelt, dass ein Abstand D1 zu einem hinter dem ersten Fahrzeug 2 hinterherfahrenden Fahrzeug 5 oder ein Abstand D2 zu einem entgegenkommenden Fahrzeug 6 ermittelt wird. Das hinterherfahrende Fahrzeug 5 fährt dabei in dieselbe Richtung wie das Fahrzeug 2 mit einer Geschwindigkeit V2. Das entgegenkommende Fahrzeug 6 fährt mit einer Geschwindigkeit V3 entgegengesetzt zur Richtung V1.

Der Abstand D1 wird vom Heck des Fahrzeuges 2 zum Frontbereich des hinterherfahrenden Fahrzeuges 5 ermittelt.

Der Abstand D2 des entgegenkommenden Fahrzeuges 6 wird in Richtung der Fahrgeschwindigkeit V1 von dem ersten Fahrzeug 2 ermittelt. Es ist auch möglich, dass der Abstand D2 als kürzeste Verbindung zwischen dem Fahrzeug 2 und dem entgegenkommenden Fahrzeug 6 berechnet wird.

Während die im Frontbereich des Fahrzeugs 2 befindlichen Leuchtmittel 1 bei Annäherung des entgegenkommenden Fahrzeuges 6 bezüglich ihrer Helligkeitsemission vermindert werden, wird die Helligkeitsabgabe der im Heckbereich des Fahrzeugs 2 befindlichen Leuchtmittel 1 bei Annäherung des hinterherfahrenden Fahrzeuges 5 vermindert. Die Verminderung der Helligkeitsabgabe ist dabei eine Funktion der Abstände D1 und/oder D2.

Die im Frontbereich befindlichen Leuchtmittel 1 sind als Nebellicht, als Abblend- und/oder als Fernlicht ausgebildet.

Die Leuchtmittel 1 im Heckbereich des Fahrzeugs 2 sind als Bremsleuchten, insbesondere als dritte Bremsleuchte und/oder als Nebelleuchte ausgebildet. Nähert sich ein Fahrzeug von hinten, so werden die beleuchteten und aktivierten Leuchtmittel 1 im Heckbereich durch die Steuer- oder Regelvorrichtung 4 so angesteuert, dass sie weniger Helligkeit emittieren. Eine entsprechende Ansteuerung resultiert dann, wenn das hinterherfahrende Fahrzeug 5 einen Abstand D1 aufweist, der niedriger als ein Mindestabstand ist. Es können auch unterschiedliche Mindestabstandswerte vorgegeben sein, so dass die Lichtemission der am Heck befindlichen Leuchtmittel 1 des Fahrzeugs 2 stufenweise weniger Licht emittieren, jeweils bei Unterschreiten eines der Mindestabstände. Auch ein kontinuierliches Verringern der Lichtemission entweder linear, progressiv oder degressiv ist möglich. Ferner ist ein stärkeres oder schwächeres Dimmen in Abhängigkeit von der Summe der Geschwindigkeit V1 und V2, realisierbar. Auf diese Art kann auf die entsprechenden Verkehrsbedingungen situativ angemessen reagiert werden. Ermittelt der Sensor 3 somit Regelungs- und/oder steuerungsrelevante Abstandswerte, so wird die Helligkeit der bereits belasteten Bremsleistung als Funktion des Abstandes verringert. Ist die Nebelleuchte aktiviert, so lässt sich deren Lichtemission ebenfalls in Abhängigkeit von dem detektierten Abstand reduzieren. Dasselbe gilt für eine dritte Bremsleistung.

Während vorhergehend der Fall des sich von hinten nähernden Fahrzeuges beleuchtet wurde, ist auch ein Abdimmen der im Frontbereich des Fahrzeugs 2 befindlichen Leuchtmittel 1 möglich. Dabei ermittelt der im Frontbereich befindliche Sensor 3 den Abstand des entgegenkommenden Fahrzeuges 6. Auch hier kann die Summe der Geschwindigkeiten des Fahrzeugs 2 und des entgegenkommenden Fahrzeugs 6 berücksichtigt werden, derart, dass bei einem sehr kleinen Summenwert die Reduktion der Lichtemission der Leuchtmittel 1 im Frontbereich stärker stattfindet, als bei einem größeren Summenwert. Auch hier lässt sich neben einer kontinuierlichen Verringerung der Leuchtstärke eine stufenweise Verringerung realisieren. Bei kontinuierlicher Verringerung ist, wie im Heckbereich ein lineares, progressives oder degressives Vermindern der Leuchtemission realisierbar.

In Figur 1 ist ein zusätzlicher Sensor 3 im Frontbereich angezeichnet, der auch die außerhalb des Fahrzeugs befindliche Helligkeit sensiert, wobei dieser zusätzliche Sensor 3 als Taglichtsensor 7 realisiert ist. Unter Nutzung der von diesem Taglichtsensor 7 detektierten Umgebungsinformationen, ist durch die Steuer- oder Regelvorrichtung 4 das Bremslicht bei Nacht stärker dimmbar, als bei Tag.

Im vorliegenden Ausführungsbeispiel wird bei Detektion eines nachfolgenden Fahrzeugs 5 eine Nebelschlussleuchte auch so weit gedimmt, dass sie abgeschaltet wird. Durch ein solch gezieltes Dimmen wird die Konzentration der betroffenen Führer von Fahrzeugen auf das Verkehrsgeschehen nicht unnötig gestört. Dies erhöht den Fahrkomfort und insbesondere auch die Sicherheit im Straßenverkehr.

Wird von einer entsprechenden Sensorik der Stillstand des Fahrzeuges 2 sensiert und gleichzeitig ein hinter dem Fahrzeug 2 befindliches Fahrzeug 5 sensiert, so ist es möglich, die im Heck befindlichen Leuchtmittel abzudimmen.

Im vorliegenden Ausführungsbeispiel sind auch Helligkeitsschwellwerte so bestimmt, dass die Steuer- oder Regelvorrichtung 4 bei über- und/oder Unterschreiten dieser Geschwindigkeitsschwellwerte mehr oder weniger stark die Leuchtmittel 1 abdimmt.

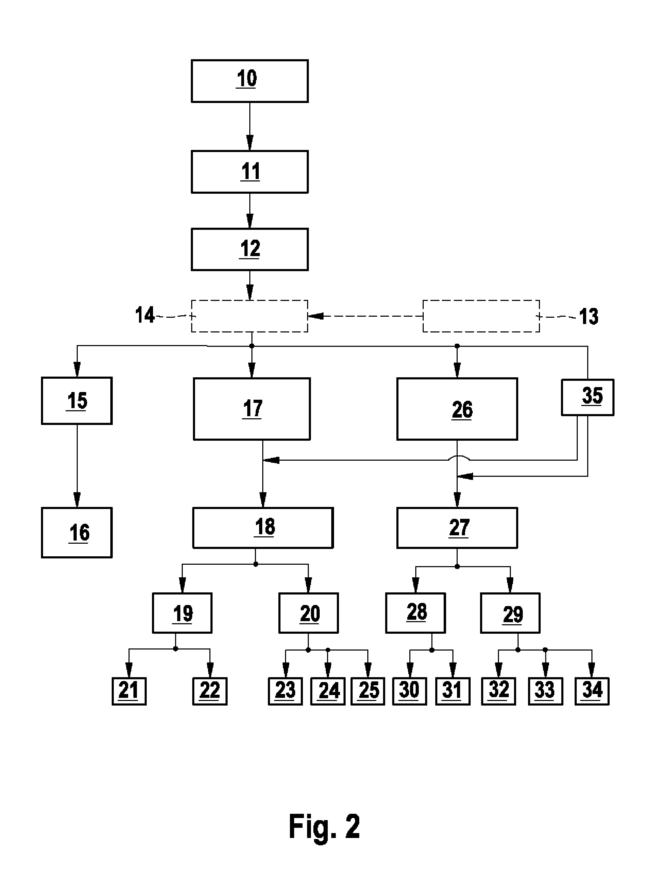

In Figur 2 ist eine schematische Abfolge von Verfahrensschritten skizziert, die zum Vermeiden von Blendungen hinterherfahrender oder entgegenkommender Führer von Kraftfahrzeugen führt.

In Schritt 10 wird das Einschalten von Leuchtmitteln durchgeführt. Diese Leuchtmittel 1 sind dabei entweder im Frontbereich des Fahrzeugs 2 oder im Heckbereich des Fahrzeugs 2 befindlich. In einem nachfolgenden Schritt 11 findet die Detektion eines Abstandes D1 und/oder D2 eines außerhalb des Fahrzeugs 2 befindlichen Objektes, wie einem Fahrzeug 5 und/oder 6 statt.

Vorzugsweise in der Steuer- und/oder Regelvorrichtung 4 findet ein Abgleich der detektierten Abstände D1 und/oder D2 mit einem vorher festgelegten Abstandsschwellwert DS statt. Der Abstandsschwellwert DS ist entweder werksseitig voreingestellt und/oder kann von dem Führer des Fahrzeugs 2 eingegeben oder nachjustiert werden. Dieser Abgleich findet in Schritt 12 statt. In einem optionalen Schritt 13 findet die Detektion der Helligkeit außerhalb des Fahrzeuges 2 mittels eines Sensors 3 statt. Dabei wird entweder ein Taglichtsensor 7 verwendet oder aber die Aktivierung des Abblendlichtes festgestellt. In einem dem Schritt 12 nachfolgenden optionalen Schritt 14 wird dann die Stärke einer etwaigen Abdimmung nach festgelegten Parametern bestimmt. Es stellen sich vier Fälle ein, die von der Steuer- oder Regelvorrichtung gesteuert oder geregelt werden. In einem Schritt 15 ist festgestellt worden, dass sowohl D1 als auch D2 größer DS sind. Die kritische Abstandsschwelle ist somit von den Fahrzeugen 5 und 6 nicht unterschritten. In Schritt 16 findet daher kein Abdimmen der Leuchtmittel 1 statt. In einem Schritt 17 wird alternativ dazu festgestellt, dass D1 kleiner oder gleich DS ist, also dass das sich von hinten nähernde Fahrzeug den Mindestabstand unterschritten hat. In einem nachfolgenden Schritt 18 wird zunächst ein Abdimmen der hinteren Leuchtmittel 1, also der Bremsleuchten, insbesondere der dritten Bremsleuchte, der Nebelschlussleuchte und/oder der Rücklichter initiiert. Dabei wird das Abdimmen in einem Schritt 19 schrittweise oder in einem Schritt 20 kontinuierlich hervorgerufen. Bei schrittweiser Abdimmung wird entweder in einem Schritt 21 die Abdimmung einmalig durchgeführt, oder in einem Schritt 22 mehrmals durchgeführt.

Bei kontinuierlicher Dimmung wird in einem Schritt 23 entweder linear in Abhängigkeit von Abstand D1 abgedimmt oder progressiv in einem Schritt 24 in Abhängigkeit vom Abstand D1 oder degressiv in Abhängigkeit des Abstandes D1 in einem Schritt 25.

Ähnlich zur Abfolge bzgl. der im hinteren Bereich des Fahrzeuges 2 positionierten Leuchtmittel 1 in den Schritten 17 bis 25 findet auch eine Abdimmung der im Frontbereich des Fahrzeugs 2 befindlichen Leuchtmittel 1 statt. So wird bspw. das Fernlicht auf Abblendlichtniveau abgesenkt. Dabei werden die Schritte 26 bis 34 durchlaufen. In Schritt 26 wird das Unterschreiten des Mindestabstandes zu einem entgegenkommenden Fahrzeug im Sinne D2 kleiner gleich DS detektiert, was in dem Schritt 27 zu einem Abdimmen der vorderen Leuchtmittel 1 des Fahrzeugs 2 führt. In Schritt 28 wird entweder schrittweise gedimmt oder in Schritt 29 kontinuierlich. Auch das schrittweise Dimmen wird in Schritt 30 einmalig oder in Schritt 31 mehrmals durchgeführt. Das kontinuierliche Abdimmen wird in Schritt 32 nachfolgend zu Schritt 29 entweder linear, oder in Schritt 33 progressiv, oder in Schritt 34 degressiv in Abhängigkeit von dem Abstand D2 durchgeführt. In einem Schritt 35, wird das Unterschreiten des vorderen und hinteren Mindestabstandes detektiert, wodurch die Schritte 18 und 27 nachfolgen.

Das Verfahren zum Abdimmen der Leuchtmittel 1 ist auch in Bezug auf ein Fahrzeug durch zuführen, das vor dem Fahrzeug 2 in der selben Richtung wie v1 fährt. Ein solches Fahrzeug ist in den Figuren nicht dargestellt. Dieses nicht dargestellte Fahrzeug hat eine Geschwindigkeit v4 die kleiner oder gleich v1 ist. Bei Unterschreiten eines Mindestabstandes, der durch die in Richtung des vorausfahrenden Fahrzeuges am Fahrzeug 2 angebrachten Sensoren 3 ermittelt wird, werden die auf das vorausfahrende Fahrzeug ausgerichteten Leuchtmittel 1, etwa Fernlicht oder Abblendlicht abgedimmt.

Es werden grundsätzlich immer die auf das sensierte Objekt, z.B. Fahrzeug 5 oder 6, ausgerichteten Leuchtmittel 1 abgedimmt. Im hinteren Bereich des Fahrzeugs 2 sind das etwa das Bremslicht, das Nebelleicht und/oder das Schlusslicht. Im vorderen Bereich des Fahrzeugs 2 sind das etwa das Fernlicht und/oder das Abblendlicht

## Patentansprüche

1. Verfahren zum Verringern der Helligkeitsabgabe von einem Leuchtmittel (1) eines Fahrzeugs (2), insbesondere eines Kraftfahrzeugs, wobei der Abstand (D1 und D2) zu außerhalb des Fahrzeugs (2) befindlichen Objekten (5, 6) mittels eines Sensors (3) ermittelt wird, **dadurch gekennzeichnet, dass** die Helligkeitsabgabe eines bereits aktivierten Leuchtmittels (1) in Abhängigkeit von dem ermittelten Abstand (D1, D2) verringert wird.

2. Verfahren nach Anspruch 1, wobei die emittierte Helligkeit des Leuchtmittels (1) bei sich verringerndem Abstand (D1, D2) des Fahrzeugs (2) zu dem Objekt (5, 6) verringert wird.

3. Verfahren nach Anspruch 1 oder 2, wobei die emittierte Helligkeit des Leuchtmittels (1) kontinuierlich oder stufenweise verringert wird.

4. Verfahren nach einem der Ansprüche 1 bis 3, wobei die emittierte Helligkeit linear, progressiv oder degressiv als Funktion D1, D2 verringert wird.

5. Verfahren nach einem der Ansprüche 1 bis 4, wobei das Leuchtmittel (1) eine Leuchtdiode (LED) eine Xenonlampe, oder eine Glühbirne umfasst.

6. Verfahren nach einem der Ansprüche 1 bis 5, wobei das Leuchtmittel (1) in einem Fernlicht, einem Abblendlicht, einem Bremslicht und/oder einem Nebellicht integriert ist.

7. Verfahren nach einem der Ansprüche 1 bis 6, wobei die Helligkeitsabgabe bei Unterschreiten eines Mindestabstandes (DS) eines sensierten Objektes (5, 6) verringert wird.

8. Verfahren nach einem der Ansprüche 1 bis 7, wobei die außerhalb des Fahrzeugs (2) befindliche Helligkeit sensiert wird und bei Unterschreiten eines Helligkeitsschwellwertes die Verringerung der Helligkeitsabgabe des Leuchtmittels (1) stärker bewirkt wird, als bei Überschreiten des Helligkeitsschwellwertes.

9. Verfahren nach einem der Ansprüche 1 bis 8, wobei der Abstand (D1, D2) mittels Abstandssensoren eines Abstandregeltempomaten (ACC) oder mittels Parksensoren ermittelt wird.

10. Vorrichtung, enthaltend technische Einrichtungen zum Durchführen des Verfahrens nach einem der Ansprüche 1 bis 9.
